# EUROPEAN PATENT SPECIFICATION

(11) **EP 2 916 594 B1**
(45) Date of publication and mention of the grant of the patent: **08.03.2017**
(21) Application number: 12888738.7
(22) Date of filing: 23.11.2012
(51) Int. Cl.: H04W 48/18, H04W 60/00

(54) **USER EQUIPMENT REGISTRATION METHOD AND RADIO NETWORK CONTROLLER**
REGISTRIERUNGSVERFAHREN FÜR EINE BENUTZERVORRICHTUNG UND FUNKNETZSTEUERUNG
PROCÉDÉ D'ENREGISTREMENT D'ÉQUIPEMENT UTILISATEUR ET CONTRÔLEUR DE RÉSEAU RADIO

(43) Date of publication of application: 09.09.2015
(73) Proprietor: Huawei Technologies Co., Ltd., Longgang District Shenzhen, Guangdong 518129 (CN)
(72) Inventor: LIU, Jun, Shenzhen Guangdong 518129 (CN); GUO, Chuanzhen, Shenzhen Guangdong 518129 (CN); GAO, Liangzhu, Shenzhen Guangdong 518129 (CN)
(74) Representative: Gill Jennings & Every LLP
(86) International application number: PCT/CN2012/085151
(87) International publication number: WO 2014/079037

(56) References cited:
- CN-A- 101 674 628
- CN-A- 102 014 365
- CN-A- 102 196 531
- TELIASONERA: "Redirection in a MOCN shared network", 3GPP DRAFT; S2-040729, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Atlanta; 20040211, 11 February 2004 (2004-02-11), XP050248088, [retrieved on 2004-02-11]
- TELIASONERA: "Signaling flows for network selection", 3GPP DRAFT; S2-040731, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Atlanta; 20040220, 20 February 2004 (2004-02-20), XP050247665, [retrieved on 2004-02-20]
- TELIASONERA: "Clarification on PLMN selection in a shared network", 3GPP DRAFT; N1-042118, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG CN, no. Seoul, Korea; 20041201, 1 December 2004 (2004-12-01), XP050059489, [retrieved on 2004-12-01]
- HUAWEI ET AL: "New use case on PLMN selection enhancements towards a shared area", 3GPP DRAFT; S1-124184 RSE PCR - NEW USE CASE ON PLMN SELECTION ENHANCEMENTS TOWARDS A SHARED AREA_AGREED, 3RD GENERATION PARTNERSHIP PROJECT (3GPP), MOBILE COMPETENCE CENTRE ; 650, ROUTE DES LUCIOLES , vol. SA WG1, no. Edinburgh, UK; 20121112 - 20121116 19 November 2012 (2012-11-19), XP050681673, Retrieved from the Internet: URL:www.3gpp.org/ftp/tsg_sa/WG1_Serv/TSGS1 _60_Edinburgh/docs [retrieved on 2012-11-19]
- 3GPP: "3rd Generation Partnership Project;Technical Specification Group Services and System Aspects; Network Sharing;Architecture and Functional Description(Release 6)", 3GPP DRAFT; 23851-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Phoenix, USA; 20040305, 5 March 2004 (2004-03-05), XP050201735, [retrieved on 2004-03-05]

## Description

### TECHNICAL FIELD

The present invention relates to the field of communications technologies, and in particular, to a user equipment registration method, a radio network controller, and a user equipment.

### BACKGROUND

The 3rd Generation Partnership Project (3rd Generation Partnership Project, 3GPP for short) introduces a multi-operator core network (Multi-Operator Core Network, MOCN for short) feature in the R6 protocol to support network sharing by multiple operators, so as to reduce network construction costs of an operator.

For a user equipment (User Equipment, UE for short) that supports the MOCN, the UE that supports the MOCN may learn multiple public land mobile network identifiers (Public land mobile network identifier, PLMN ID for short) broadcast by a cell, and a PLMN ID selected by the UE is carried in an initial direct transfer (INIT DIRECT TRANSFER) message that is sent to a radio network controller (Radio Network Controller, RNC for short). Then, the RNC directly routes the UE to a core network (Core Network, CN for short) corresponding to the PLMN ID selected by the UE.

In an actual application, due to requirements of an operator, there may be the following networking scenarios:
(1) An operator A has a 2nd generation (2nd Generation, 2G for short) mobile communications network, an operator B has no 2G network, and a user of the operator B may roam in the 2G network of the operator A;
(2) 3G networks of an operator A and an operator B form a MOCN of 3rd generation (3rd Generation, 3G for short) mobile communications, and a user of the operator A and a user of the operator B cannot roam in the 3G network of the other party.

It is assumed that a UE that supports the MOCN subscribes to the operator B, and after the UE camps on a cell in the 2G network of the operator A, the UE camps on, by cell reselection, a cell in a MOCN shared by the operator A and the operator B. According to a protocol, when the foregoing UE that supports the MOCN registers with the cell in MOCN, the UE includes, in an INIT DIRECT TRANSFER message, an ID of a PLMN (corresponding to the operator A) involved in a registration performed by the UE last time. Then, an RNC routes the foregoing UE to a CN of the operator A. A user of the operator A and a user of the operator B cannot roam in the 3G network of the other party, and therefore, a UE registration fails.

That is, when a shared cell includes a registered PLMN (Registered PLMN, RPLMN for short) and a home PLMN (Home PLMN, HPLMN for short) of a UE that supports a MOCN, in the prior art, the UE should preferentially select the RPLMN. In this case, the following problem arises: the RPLMN of the MOCN cell may not accept a request sent by the UE; as described above, the user of the operator B may roam in the 2G network of the operator A, but cannot roam in the 3G network of the operator A. In this way, a UE registration cannot be successful.

Telisonera: "redirection in a MOCN shared network", 3GPP draft and "signalling flows from network selection", 3GPP draft, both disclose teaching associated with control and flow signalling for network selection on shared networks.The present invention provides a user equipment registration method, a radio network controller, and a user equipment, so as to implement a successful UE registration when a shared cell includes an RPLMN and an HPLMN of a UE.

A first aspect of the present invention provides a user equipment registration method, comprising: receiving, by a radio network controller, an initial direct transfer message sent by a user equipment that supports a multi-operator core network, MOCN, wherein the initial direct transfer message carries a public land mobile network identifier, PLMN ID, selected by the user equipment, and the PLMN ID selected by the user equipment is an ID of a PLMN involved in a latest successful registration performed by the user equipment; sending, by the radio network controller, a redirection request to a core network of one of operators that form the MOCN, and receiving a PLMN ID delivered to the user equipment by the core network that is of the operator and accepts the redirection request, wherein the redirection request carries the PLMN ID selected by the user equipment, and the PLMN ID delivered to the user equipment by the core network that is of the operator and accepts the redirection request is the PLMN ID selected by the user equipment; and sending, by the radio network controller, a downlink direct transfer message to the user equipment, wherein the downlink direct transfer message carries the PLMN ID delivered to the user equipment by the core network that is of the operator and accepts the redirection request; wherein the sending, by the radio network controller, a redirection request to a core network of one of operators that form the MOCN, and receiving a PLMN ID delivered to the user equipment by the core network that is of the operator and accepts the redirection request comprises: sending, by the radio network controller, the redirection request to a core network of a first operator that is corresponding to the PLMN ID selected by the user equipment, wherein the redirection request carries the PLMN ID selected by the user equipment; receiving, by the radio network controller, a redirection rejection message sent by the core network of the first operator, wherein a cause value carried in the redirection rejection message is location area not allowed, and the redirection rejection message is sent to the radio network controller after the core network of the first operator receives the redirection request and determines that the user equipment is not allowed to roam in the core network of the first operator; sending, by the radio network controller, a redirection request to a core network of a second operator except the core network of the first operator among core networks of the operators that form the MOCN, wherein the redirection request carries the PLMN ID selected by the user equipment; and receiving, by the radio network controller, a non-access stratum accept message sent by the core network of the second operator, wherein the non-access stratum accept message carries a PLMN ID delivered to the user equipment by the core network of the second operator, and the non-access stratum accept message is sent to the user equipment after the core network of the second operator receives the redirection request and determines that the core network of the second operator is a core network of an operator that is corresponding to a home PLMN of the user equipment or determines that the user equipment is allowed to roam in the core network of the second operator.

With reference to the first aspect, in a first possible implementation manner of the first aspect, that the downlink direct transfer message carries the PLMN ID delivered to the user equipment by the core network that is of the operator and that accepts the redirection request, includes:
the downlink direct transfer message carries the non-access stratum accept message, where a PLMN ID carried in a location area identity field of the non-access stratum accept message is the PLMN ID delivered to the user equipment by the core network that is of the operator and accepts the redirection request.

A second aspect of the present invention provides a radio network controller comprising:
a receiving module, configured to: receive an initial direct transfer message sent by a user equipment that supports a multi-operator core network, MOCN, wherein the initial direct transfer message carries a public land mobile network identifier, PLMN ID, selected by the user equipment, and the PLMN ID selected by the user equipment is an ID of a PLMN involved in a latest successful registration performed by the user equipment; and after a sending module sends a redirection request, receive a PLMN ID delivered to the user equipment by a core network that is of an operator and accepts the redirection request, wherein the PLMN ID delivered to the user equipment by the core network that is of the operator and accepts the redirection request is the PLMN ID selected by the user equipment; and
the sending module, configured to: send the redirection request to a core network of one of operators that form the MOCN, wherein the redirection request carries the PLMN ID selected by the user equipment; and send a downlink direct transfer message to the user equipment, wherein the downlink direct transfer message carries the PLMN ID delivered to the user equipment by the core network that is of the operator and accepts the redirection request; wherein the sending module is configured to send the redirection request to a core network of one of operators that form the MOCN comprises:
   the sending module is specifically configured to: send a redirection request to a core network of a first operator that is corresponding to the PLMN ID selected by the user equipment, wherein the redirection request carries the PLMN ID selected by the user equipment; and after the receiving module receives a redirection rejection message sent by the core network of the first operator, send a redirection request to a core network of a second operator except the core network of the first operator among core networks of the operators that form the MOCN, wherein the redirection request carries the PLMN ID selected by the user equipment; and
   that a receiving module is configured to receive a PLMN ID delivered to the user equipment by a core network that is of an operator and accepts the redirection request comprises:
      the receiving module is specifically configured to: after the sending module sends the redirection request to the core network of the first operator, receive the redirection rejection message sent by the core network of the first operator, wherein a cause value carried in the redirection rejection message is location area not allowed, and the redirection rejection message is sent to the radio network controller after the core network of the first operator receives the redirection request and determines that the user equipment is not allowed to roam in the core network of the first operator; and after the sending module sends the redirection request to the core network of the second operator, receive a non-access stratum accept message sent by the core network of the second operator, wherein the non-access stratum accept message carries a PLMN ID delivered to the user equipment by the core network of the second operator, and the non-access stratum accept message is sent to the user equipment after the core network of the second operator receives the redirection request and determines that the core network of the second operator is a core network that is of an operator which is corresponding to a home PLMN of the user equipment or determines that the user equipment is allowed to roam in the core network of the second operator.

According to the user equipment registration method and the radio network controller that are provided in the present invention, after receiving the initial direct transfer message sent by the user equipment that supports the MOCN, the radio network controller sends the redirection request to the core network of one of operators that form the MOCN, and receives the PLMN ID delivered to the foregoing user equipment by the core network that is of the operator and accepts the foregoing redirection request; and finally, the radio network controller sends the downlink direct transfer message to the user equipment, where the downlink direct transfer message carries the foregoing PLMN ID delivered to the user equipment by the core network that is of the operator and accepts the redirection request, and the foregoing PLMN ID delivered to the user equipment by the core network that is of the operator and accepts the redirection request is the PLMN ID selected by the foregoing user equipment. Therefore, consistency can be ensured between the PLMN ID delivered by the core network of the operator and the PLMN ID requested by the user equipment. In this way, the user equipment can register successfully, disconnection of the user equipment from a network is avoided, and user experience is improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an embodiment of a user equipment registration method according to the present invention;
FIG. 2 is a flowchart of another embodiment of a user equipment registration method according to the present invention;
FIG. 3 is a flowchart of still another embodiment of a user equipment registration method according to the present invention;
FIG. 4 is a schematic structural diagram of an embodiment of a radio network controller according to the present invention;
FIG. 5 is a schematic structural diagram of an embodiment of a user equipment according to the present invention;
FIG. 6 is a schematic structural diagram of another embodiment of a radio network controller according to the present invention; and
FIG. 7 is a schematic structural diagram of another embodiment of a user equipment according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

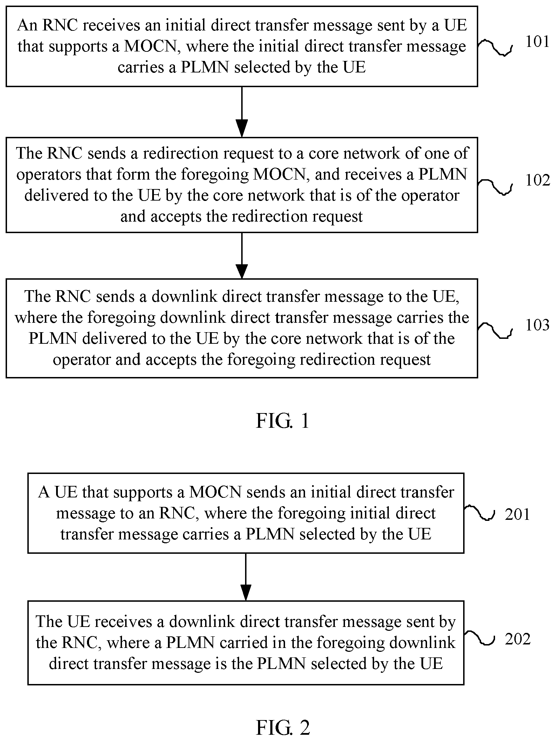

FIG. 1 is a flowchart of an embodiment of a user equipment registration method according to the present invention. As shown in FIG. 1, the user equipment registration method may include:
Step 101: An RNC receives an initial direct transfer (INIT DIRECT TRANSFER) message sent by a UE that supports a MOCN, where the initial direct transfer message carries a PLMN ID selected by the UE.
   The PLMN ID selected by the UE is an ID of a PLMN involved in a latest successful registration performed by the UE.
Step 102: The RNC sends a redirection request to a core network of one of operators that form the foregoing MOCN, and receives a PLMN ID delivered to the UE by the core network that is of the operator and accepts the redirection request.

The foregoing redirection request carries the PLMN ID selected by the UE, and the foregoing PLMN ID delivered to the UE by the core network that is of the operator and accepts the redirection request is the PLMN ID selected by the UE.

Specifically, the RNC may send the redirection request to a core network of a first operator that is corresponding to the PLMN ID selected by the UE, where the redirection request carries the PLMN ID selected by the UE; then, the RNC receives a redirection rejection message sent by the core network of the first operator, where a cause value carried in the foregoing redirection rejection message is location area not allowed, and the foregoing redirection rejection message is sent to the foregoing RNC after the core network of the first operator receives the foregoing redirection request and determines that the UE is not allowed to roam in the core network of the first operator.

Next, the RNC sends a redirection request to a core network of a second operator except the core network of the first operator among core networks of the operators that form the foregoing MOCN, where the foregoing redirection request carries the PLMN ID selected by the UE; then, the RNC receives a non-access stratum accept message sent by the core network of the second operator, where the foregoing non-access stratum accept message carries a PLMN ID delivered to the UE by the core network of the second operator, and the foregoing non-access stratum accept message is sent to the UE after the core network of the second operator receives the redirection request and determines that the core network of the second operator is a core network of an operator that is corresponding to a home PLMN of the foregoing UE or determines that the foregoing UE is allowed to roam in the core network of the second operator.

In this embodiment, the RNC may first send the redirection request to the core network of the first operator that is corresponding to the PLMN ID selected by the UE, and after receiving the redirection rejection message sent by the core network of the first operator, the RNC then sends the redirection request to the core network of the second operator except the core network of the first operator among the core networks of the operators that form the foregoing MOCN. If the foregoing MOCN includes at least three operators, that is, at least two second operators are included in addition to the first operator, and the second operator is not unique, the RNC first sends the redirection request to the core network of the first operator that is corresponding to the PLMN ID selected by the UE, and after receiving the redirection rejection message sent by the core network of the first operator, the RNC repeats the foregoing process to sequentially send the redirection request to each second operator except the first operator among the operators that form the MOCN until the non-access stratum accept message is received.

It should be noted that, if the first operator has at least two core networks, the RNC needs to send the redirection request only to one core network of the first operator without sending the redirection request to each core network of the first operator. Similarly, if the second operator has at least two core networks, the RNC needs to send the redirection request only to one core network of the second operator without sending the redirection request to each core network of the second operator. That is, the RNC only needs to send the redirection request only once for each operator.

Step 103: The RNC sends a downlink direct transfer (DL DIRECT TRANSFER) message to the UE, where the foregoing downlink direct transfer message carries the PLMN ID delivered to the UE by the core network that is of the operator and accepts the foregoing redirection request.

Specifically, that the foregoing downlink direct transfer message carries the PLMN ID delivered to the UE by the core network that is of the operator and accepts the foregoing redirection request may be: the foregoing downlink direct transfer message carries the non-access stratum accept message, where a PLMN ID carried in a location area identity (Location Area Identity, LAI for short) field of the foregoing non-access stratum accept message is the PLMN ID delivered to the UE by the core network that is of the operator and accepts the redirection request.

In the foregoing embodiment, after receiving the initial direct transfer message sent by the UE that supports the MOCN, the RNC sends the redirection request to the core network of one of operators that form the MOCN, and receives the PLMN ID delivered to the foregoing UE by the core network that is of the operator and accepts the foregoing redirection request; and finally, the RNC sends the downlink direct transfer message to the UE, where the downlink direct transfer message carries the foregoing PLMN ID delivered to the UE by the core network that is of the operator and accepts the redirection request, and the foregoing PLMN ID delivered to the UE by the core network that is of the operator and accepts the redirection request is the PLMN ID selected by the foregoing UE. Therefore, consistency can be ensured between the PLMN ID delivered by the core network of the operator and the PLMN ID requested by the UE. In this way, the UE can register successfully, disconnection of the UE from a network is avoided, and user experience is improved.

FIG. 2 is a flowchart of another embodiment of a user equipment registration method according to the present invention. As shown in FIG. 2, the user equipment registration method may include:
Step 201: A UE that supports a MOCN sends an initial direct transfer message to an RNC, where the foregoing initial direct transfer message carries a PLMN ID selected by the UE.
   The PLMN ID selected by the foregoing UE is an ID of a PLMN involved in a latest successful registration performed by the UE.
Step 202: The UE receives a downlink direct transfer message sent by the RNC, where a PLMN ID carried in the foregoing downlink direct transfer message is the PLMN ID selected by the UE.

In the foregoing embodiment, consistency can be ensured between a PLMN ID delivered by a core network of an operator and the PLMN ID requested by the UE. In this way, the UE can register successfully, disconnection of the UE a network is avoided, and user experience is improved.

The methods provided in the embodiments shown in FIG. 1 and FIG. 2 may be applied to the following scenarios:
(1) An operator A has a 2G network, an operator B has no 2G network, and a user of the operator B may roam in the 2G network of the operator A;
(2) 3G networks of an operator A and an operator B form a 3G MOCN, and a user of the operator A and a user of the operator B cannot roam in the 3G network of the other party.

It is assumed that the UE that supports the MOCN subscribes to the operator B. After camping on a cell in the 2G network of the operator A, the UE camps on, by cell reselection, a cell in a MOCN shared by the operator A and the operator B. According to a protocol, when the foregoing UE that supports the MOCN registers with the MOCN cell, the UE includes, in an initial direct transfer message, an ID of a PLMN (corresponding to the operator A) involved in a registration performed by the UE last time. Then, an RNC routes the foregoing UE to a CN of the operator A. A user of the operator A and a user of the operator B cannot roam in the 3G network of the other party, and therefore, a UE registration fails.

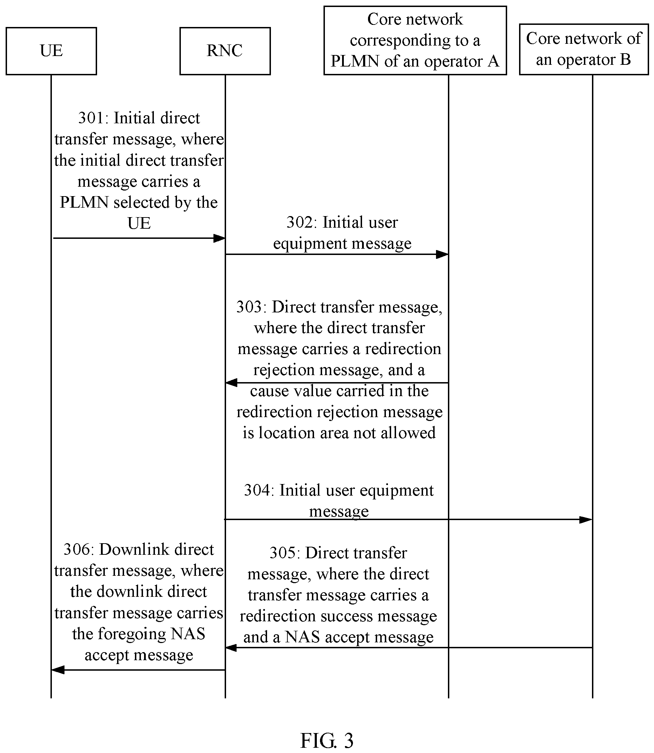

The user equipment registration method provided in the present invention can resolve the foregoing problem. FIG. 3 is a flowchart of still another embodiment of a user equipment registration method according to the present invention. As shown in FIG. 3, the user equipment registration method may include:
Step 301: A UE that supports a MOCN sends an initial direct transfer message to an RNC, where the initial direct transfer message carries a PLMN ID selected by the UE.
   The PLMN ID selected by the UE is an ID of a PLMN involved in a latest successful registration performed by the UE. In this embodiment, the ID of the PLMN involved in the latest successful registration performed by the UE is a PLMN ID of an operator A.
Step 302: The RNC performs processing by regarding the foregoing UE that supports the MOCN as a UE that does not support the MOCN (Non-Supporting UE), starts a redirection mechanism, and sends an initial user equipment message (INIT UE MESSAGE) to a core network corresponding to a PLMN ID of an operator A.

The foregoing initial user equipment message is a redirection request, where the initial user equipment message carries the PLMN ID selected by the UE, that is, the PLMN ID carried in the initial user equipment message is the PLMN ID of the operator A. Specifically, that the PLMN ID carried in the initial user equipment message is the PLMN ID of the operator A may be: a PLMN ID carried in a LAI field of the initial user equipment message is the PLMN ID of the operator A.

Step 303: The core network corresponding to the PLMN ID of the operator A sends a direct transfer (DIRECT TRANSFER) message to the RNC, where the direct transfer message carries a redirection rejection message, and a cause value carried in the redirection rejection message is location area not allowed.

Specifically, after the core network corresponding to the PLMN ID of the operator A receives the initial user equipment message sent by the RNC, it is discovered that the foregoing UE is a 3G user that subscribes to an operator B, and a user of the operator A and a user of the operator B cannot roam in the 3G network of the other party. Therefore, the core network corresponding to the PLMN ID of the operator A does not allow the UE to roam in the core network corresponding to the PLMN ID of the operator A. In this case, the core network corresponding to the PLMN ID of the operator A sends the redirection rejection message to the RNC.

Step 304: The RNC sends an initial user equipment message to a core network of an operator B.

The foregoing initial user equipment message is a redirection request, where the initial user equipment message carries the PLMN ID selected by the UE, that is, the PLMN ID carried in the initial user equipment message is the PLMN ID of the operator A. Specifically, that the PLMN ID carried in the initial user equipment message is the PLMN ID of the operator A may be: a PLMN ID carried in a LAI field of the initial user equipment message is the PLMN ID of the operator A.

Step 305: The core network of the operator B sends a direct transfer message to the RNC, where the direct transfer message carries a redirection success message and a non-access stratum (Non-Access Stratum, NAS for short) accept message.

Specifically, after the core network of the operator B receives the initial user equipment message sent by the RNC, it is discovered that the foregoing UE is a 3G user that subscribes to the operator B, and then the operator B accepts the foregoing redirection request, sends the direct transfer message to the RNC, and includes the redirection success message and the NAS accept message in the direct transfer message, where the NAS accept message carries a PLMN ID delivered to the UE by the core network of the operator B. Specifically, that the NAS accept message carries a PLMN ID delivered to the UE by the core network of the operator B may be: a LAI field of the NAS accept message carries the PLMN ID delivered to the UE by the core network of the operator B. The foregoing PLMN ID delivered to the UE by the core network of the operator B is the PLMN ID selected by the foregoing UE, that is, the PLMN ID of the operator A.

Step 306: The RNC sends a downlink direct transfer (DL DIRECT TRANSFER) message to the UE, where the downlink direct transfer message carries the foregoing NAS accept message.

The NAS accept message carries the PLMN ID delivered to the UE by the core network of the operator B. Specifically, that the NAS accept message carries the PLMN ID delivered to the UE by the core network of the operator B may be: the LAI field of the NAS accept message carries the PLMN ID delivered to the UE by the core network of the operator B. The foregoing PLMN ID delivered to the UE by the core network of the operator B is the PLMN ID selected by the foregoing UE, that is, the PLMN ID of the operator A. In this way, the PLMN ID delivered to the UE by the core network of the operator B is consistent with the PLMN ID selected by the UE. Therefore, the UE registers successfully, and a registration process ends.

It should be noted that, if the MOCN further includes at least two operators in addition to the operator A, after receiving the redirection rejection message sent by the core network of the operator A, the RNC sequentially sends the redirection request to each operator of the foregoing at least two operators until the NAS accept message is received. If the foregoing at least two operators does not include the operator to which the UE subscribes, an operator that allows the UE to roam also accepts the redirection request sent by the RNC, and sends a NAS accept message to the RNC.

In the foregoing embodiment, the RNC uses the redirection mechanism for operators that form the MOCN to select an operator that can provide a service for the UE, and meanwhile the PLMN ID that is delivered in the NAS accept message by the core network that is of the operator and accepts the redirection request is the PLMN ID included in the initial direct transfer message by the UE. Therefore, consistency can be ensured between the PLMN ID delivered by the core network of the operator and the PLMN ID requested by the UE. In this way, the UE can register successfully, disconnection of the UE from a network is avoided, and user experience is improved.

Persons of ordinary skill in the art may understand that all or some of the steps of the foregoing method embodiments can be implemented by a program instructing relevant hardware. The program may be stored in a computer-readable storage medium. When the program runs, the steps of the foregoing method embodiments are performed. The foregoing storage medium includes: any medium that can store program code, such as a ROM, a RAM, a magnetic disk, or an optical disc.

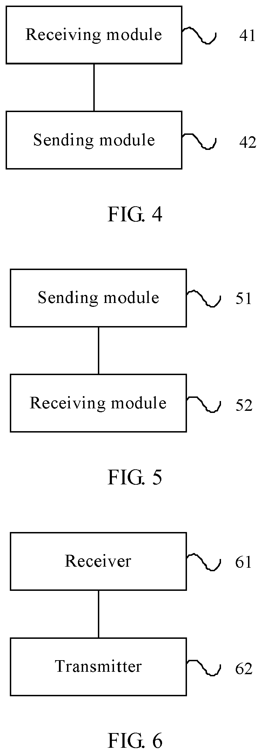

FIG. 4 is a schematic structural diagram of an embodiment of a radio network controller according to the present invention. The RNC in this embodiment may implement the process of the embodiment shown in FIG. 1 of the present invention. As shown in FIG. 4, the RNC may include: a receiving module 41 and a sending module 42, where
the receiving module 41 is configured to: receive an initial direct transfer message sent by a UE that supports a MOCN, where the initial direct transfer message carries a PLMN ID selected by the UE, and the PLMN ID selected by the user equipment is an ID of a PLMN involved in a latest successful registration performed by the UE; and after the sending module 42 sends a redirection request, receive a PLMN ID delivered to the UE by a core network that is of an operator and accepts the redirection request, where the foregoing PLMN ID delivered to the UE by the core network that is of the operator and accepts the redirection request is the PLMN ID selected by the UE; and
the sending module 42 is configured to: send the redirection request to a core network of one of operators that form the MOCN, where the foregoing redirection request carries the PLMN ID selected by the UE; and send a downlink direct transfer message to the UE, where the downlink direct transfer message carries the PLMN ID delivered to the UE by the core network that is of the operator and accepts the foregoing redirection request.

Specifically, that the sending module 42 is configured to send the redirection request to a core network of one of operators that form the MOCN may be: the sending module 42 is specifically configured to: send the redirection request to a core network of a first operator that is corresponding to the PLMN ID selected by the UE, where the redirection request carries the PLMN ID selected by the UE; and after the receiving module 41 receives a redirection rejection message sent by the core network of the first operator, send a redirection request to a core network of a second operator except the core network of the first operator among core networks of the operators, where the foregoing redirection request carries the PLMN ID selected by the UE; and
that the receiving module 41 is configured to receive a PLMN ID delivered to the UE by a core network that is of an operator and accepts the redirection request may be: the receiving module 41 is specifically configured to: after the sending module 42 sends the redirection request to the core network of the first operator, receive the redirection rejection message sent by the core network of the first operator, where a cause value carried in the foregoing redirection rejection message is location area not allowed, and the foregoing redirection rejection message is sent to the RNC after the core network of the first operator receives the foregoing redirection request and determines that the UE is not allowed to roam in the core network of the first operator; and after the sending module 42 sends the redirection request to the core network of the second operator, receive a NAS accept message sent by the core network of the second operator, where the foregoing NAS accept message carries the PLMN ID delivered to the UE by the core network of the second operator, and the foregoing NAS accept message is sent to the foregoing UE after the core network of the second operator receives the redirection request and determines that the core network of the second operator is a core network of an operator that is corresponding to a home PLMN ID of the UE or determines that the UE is allowed to roam in the core network of the second operator.

In the foregoing embodiment, after the receiving module 41 receives the initial direct transfer message sent by the UE that supports the MOCN, the sending module 42 sends the redirection request to the core network of one of the operators that form the MOCN, and then, the receiving module 41 receives the PLMN ID delivered to the foregoing UE by the core network that is of the operator and accepts the foregoing redirection request; and finally, the sending module 42 sends the downlink direct transfer message to the UE, where the downlink direct transfer message carries the PLMN ID delivered to the UE by the foregoing core network that is of the operator and accepts the redirection request, and the PLMN ID delivered to the UE by the foregoing core network that is of the operator and accepts the redirection request is the PLMN ID selected by the foregoing UE. Therefore, consistency can be ensured between the PLMN ID delivered by the core network of the operator and the PLMN ID requested by the UE. In this way, the UE can register successfully, disconnection of the UE from a network is avoided, and user experience is improved.

FIG. 5 is a schematic structural diagram of an embodiment of a user equipment according to the present invention. The UE in this embodiment is a UE that supports a MOCN and may implement the process of the embodiment shown in FIG. 2 of the present invention. As shown in FIG. 5, the foregoing UE may include: a sending module 51 and a receiving module 52, where
the sending module 51 is configured to send an initial direct transfer message to an RNC, where the initial direct transfer message carries a PLMN ID selected by the UE, and the PLMN ID selected by the foregoing UE is an ID of a PLMN involved in a latest successful registration performed by the UE; and
the receiving module 52 is configured to: after the sending module 51 sends the initial direct transfer message, receive a downlink direct transfer message sent by the RNC, where a PLMN ID carried in the foregoing downlink direct transfer message is the PLMN ID selected by the UE.

In the foregoing embodiment, consistency can be ensured between a PLMN ID delivered by a core network of an operator and the PLMN ID requested by the UE. In this way, the UE can register successfully, disconnection of the UE from a network is avoided, and user experience is improved.

FIG. 6 is a schematic structural diagram of another embodiment of a radio network controller according to the present invention. The RNC in this embodiment may implement the process of the embodiment shown in FIG. 1 of the present invention. As shown in FIG. 6, the RNC may include: a receiver 61 and a transmitter 62, where
the receiver 61 is configured to: receive an initial direct transfer message sent by a UE that supports a MOCN, where the initial direct transfer message carries a PLMN ID selected by the UE, and the PLMN ID selected by the user equipment is an ID of a PLMN involved in a latest successful registration performed by the UE; and after the transmitter 62 sends a redirection request, receive a PLMN ID delivered to the UE by a core network that is of an operator and accepts the foregoing redirection request, where the PLMN ID delivered to the UE by the foreging core network that is of the operator and accepts the redirection request is the PLMN ID selected by the UE; and
the transmitter 62 is configured to: send the redirection request to a core network of one of operators that form the foregoing MOCN, where the redirection request carries the PLMN ID selected by the user equipment; and send a downlink direct transfer message to the UE, where the downlink direct transfer message carries the PLMN ID delivered to the UE by the core network that is of the operator and accepts the foregoing redirection request.

Specifically, that the transmitter 62 is configured to send the redirection request to a core network of one of operators that form the foregoing MOCN may be: the transmitter 62 is specifically configured to: send the redirection request to a core network of a first operator that is corresponding to the PLMN ID selected by the UE, where the redirection request carries the PLMN ID selected by the UE; and after the receiver 61 receives a redirection rejection message sent by the core network of the first operator, send a redirection request to a core network of a second operator except the core network of the first operator among core networks of the operators that form the MOCN, where the foregoing redirection request carries the PLMN ID selected by the UE; and
that the receiver 61 is configured to receive a PLMN ID delivered to the UE by a core network that is of an operator and accepts the foregoing redirection request may be: the receiver 61 is specifically configured to: after the transmitter 62 sends the redirection request to the core network of the first operator, receive the redirection rejection message sent by the core network of the first operator, where a cause value carried in the foregoing redirection rejection message is location area not allowed, and the foregoing redirection rejection message is sent to the RNC after the core network of the first operator receives the foregoing redirection request and determines that the UE is not allowed to roam in the core network of the first operator; and after the transmitter 62 sends the redirection request to the core network of the second operator, receive a NAS accept message sent by the core network of the second operator, where the foregoing NAS accept message carries the PLMN ID delivered to the UE by the core network of the second operator, and the foregoing NAS accept message is sent to the foregoing UE after the core network of the second operator receives the redirection request and determines that the core network of the second operator is a core network of an operator that is corresponding to a home PLMN ID of the UE or determines that the UE is allowed to roam in the core network of the second operator.

In the foregoing embodiment, after the receiver 61 receives the initial direct transfer message sent by the UE that supports the MOCN, the transmitter 62 sends the redirection request to the core network of one of the operators that form the MOCN, and then, the receiver 61 receives the PLMN ID delivered to the foregoing UE by the core network that is of the operator and accepts the foregoing redirection request; and finally, the transmitter 62 sends the downlink direct transfer message to the UE, where the downlink direct transfer message carries the PLMN ID delivered to the UE by the foregoing core network that is of the operator and accepts the redirection request, and the foregoing PLMN ID delivered to the UE by the core network that is of the operator and accepts the redirection request is the PLMN ID selected by the foregoing UE. Therefore, consistency can be ensured between the PLMN ID delivered by the core network of the operator and the PLMN ID requested by the UE. In this way, the UE can register successfully, disconnection of the UE from a network is avoided, and user experience is improved.

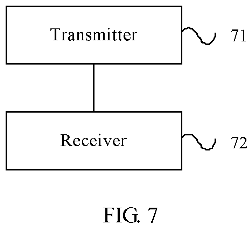

FIG. 7 is a schematic structural diagram of another embodiment of a user equipment according to the present invention. The UE in this embodiment is a UE that supports a MOCN and may implement the process of the embodiment shown in FIG. 2 of the present invention. As shown in FIG. 7, the foregoing UE may include: a transmitter 71 and a receiver 72, where
the transmitter 71 is configured to send an initial direct transfer message to an RNC, where the initial direct transfer message carries a PLMN ID selected by the UE, and the PLMN ID selected by the foregoing UE is an ID of a PLMN involved in a latest successful registration performed by the UE; and
the receiver 72 is configured to: after the transmitter 71 sends the initial direct transfer message, receive a downlink direct transfer message sent by the RNC, where a PLMN ID carried in the foregoing downlink direct transfer message is the PLMN ID selected by the UE.

In the foregoing embodiment, consistency can be ensured between a PLMN ID delivered by a core network of an operator and the PLMN ID requested by the UE. In this way, the UE can register successfully, disconnection of the UE from a network is avoided, and user experience is improved.

Persons skilled in the art may understand that the accompanying drawings are merely schematic diagrams of exemplary embodiments, and the modules or processes in the accompanying drawings are not necessarily required for implementing the present invention.

Persons skilled in the art may understand that the modules in the apparatuses provided in the embodiments may be arranged in the apparatuses in a distributed manner according to the description of the embodiments, or may be arranged in one or more apparatuses that are different from those described in the embodiments. The modules in the foregoing embodiments may be combined into one module, or split into a plurality of submodules.

Finally, it should be noted that the foregoing embodiments are merely intended for describing the technical solutions of the present invention, but not for limiting the present invention, which is defined by the appended claims.

## Claims

1. A user equipment registration method, comprising:
receiving (101), by a radio network controller, an initial direct transfer message sent by a user equipment that supports a multi-operator core network, MOCN, wherein the initial direct transfer message carries a public land mobile network identifier, PLMN ID, selected by the user equipment, and the PLMN ID selected by the user equipment is an ID of a PLMN involved in a latest successful registration performed by the user equipment;
sending (102), by the radio network controller, a redirection request to a core network of one of operators that form the MOCN, and receiving a PLMN ID delivered to the user equipment by the core network that is of the operator and accepts the redirection request, wherein the redirection request carries the PLMN ID selected by the user equipment, and the PLMN ID delivered to the user equipment by the core network that is of the operator and accepts the redirection request is the PLMN ID selected by the user equipment; and
sending (103), by the radio network controller, a downlink direct transfer message to the user equipment, wherein the downlink direct transfer message carries the PLMN ID delivered to the user equipment by the core network that is of the operator and accepts the redirection request; wherein the sending (102), by the radio network controller, a redirection request to a core network of one of operators that form the MOCN, and receiving a PLMN ID delivered to the user equipment by the core network that is of the operator and accepts the redirection request comprises:
sending, by the radio network controller, the redirection request to a core network of a first operator that is corresponding to the PLMN ID selected by the user equipment, wherein the redirection request carries the PLMN ID selected by the user equipment;
receiving, by the radio network controller, a redirection rejection message sent by the core network of the first operator, wherein a cause value carried in the redirection rejection message is location area not allowed, and the redirection rejection message is sent to the radio network controller after the core network of the first operator receives the redirection request and determines that the user equipment is not allowed to roam in the core network of the first operator;
sending, by the radio network controller, a redirection request to a core network of a second operator except the core network of the first operator among core networks of the operators that form the MOCN, wherein the redirection request carries the PLMN ID selected by the user equipment; and
receiving, by the radio network controller, a non-access stratum accept message sent by the core network of the second operator, wherein the non-access stratum accept message carries a PLMN ID delivered to the user equipment by the core network of the second operator, and the non-access stratum accept message is sent to the user equipment after the core network of the second operator receives the redirection request and determines that the core network of the second operator is a core network of an operator that is corresponding to a home PLMN of the user equipment or determines that the user equipment is allowed to roam in the core network of the second operator.

2. The method according to claim 1, wherein that the downlink direct transfer message carries the PLMN ID delivered to the user equipment by the core network that is of the operator and that accepts the redirection request, comprises:
the downlink direct transfer message carries a non-access stratum accept message, wherein a PLMN ID carried in a location area identity field of the non-access stratum accept message is the PLMN ID delivered to the user equipment by the core network that is of the operator and accepts the redirection request.

3. A radio network controller, comprising:
a receiving module (41), configured to: receive an initial direct transfer message sent by a user equipment that supports a multi-operator core network, MOCN, wherein the initial direct transfer message carries a public land mobile network identifier, PLMN ID, selected by the user equipment, and the PLMN ID selected by the user equipment is an ID of a PLMN involved in a latest successful registration performed by the user equipment; and after a sending module (42) sends a redirection request, receive a PLMN ID delivered to the user equipment by a core network that is of an operator and accepts the redirection request, wherein the PLMN ID delivered to the user equipment by the core network that is of the operator and accepts the redirection request is the PLMN ID selected by the user equipment; and
the sending module (42), configured to: send the redirection request to a core network of one of operators that form the MOCN, wherein the redirection request carries the PLMN ID selected by the user equipment; and send a downlink direct transfer message to the user equipment, wherein the downlink direct transfer message carries the PLMN ID delivered to the user equipment by the core network that is of the operator and accepts the redirection request; wherein the sending module (42) is configured to send the redirection request to a core network of one of operators that form the MOCN comprises:
the sending module (42) is specifically configured to: send a redirection request to a core network of a first operator that is corresponding to the PLMN ID selected by the user equipment, wherein the redirection request carries the PLMN ID selected by the user equipment; and after the receiving module receives a redirection rejection message sent by the core network of the first operator, send a redirection request to a core network of a second operator except the core network of the first operator among core networks of the operators that form the MOCN, wherein the redirection request carries the PLMN ID selected by the user equipment; and
that a receiving module (41) is configured to receive a PLMN ID delivered to the user equipment by a core network that is of an operator and accepts the redirection request comprises:
the receiving module (41) is specifically configured to: after the sending module (42) sends the redirection request to the core network of the first operator, receive the redirection rejection message sent by the core network of the first operator, wherein a cause value carried in the redirection rejection message is location area not allowed, and the redirection rejection message is sent to the radio network controller after the core network of the first operator receives the redirection request and determines that the user equipment is not allowed to roam in the core network of the first operator; and after the sending module (42) sends the redirection request to the core network of the second operator, receive a non-access stratum accept message sent by the core network of the second operator, wherein the non-access stratum accept message carries a PLMN ID delivered to the user equipment by the core network of the second operator, and the non-access stratum accept message is sent to the user equipment after the core network of the second operator receives the redirection request and determines that the core network of the second operator is a core network that is of an operator which is corresponding to a home PLMN of the user equipment or determines that the user equipment is allowed to roam in the core network of the second operator.

## Patentansprüche

1. Anwendergeräteintragungsverfahren, das Folgendes umfasst:
Empfangen (101) durch eine Funknetzsteuereinheit einer initialen Direktübertragungsnachricht, die durch ein Anwendergerät gesendet wird, das ein Mehrbetreiberkernnetz, MOCN, unterstützt, wobei die initiale Direktübertragungsnachricht eine Kennung eines öffentlichen Mobilfunknetzes, PLMN-ID, führt, die durch das Anwendergerät ausgewählt ist, und die PLMN-ID, die durch das Anwendergerät ausgewählt ist, eine ID eines PLMN ist, das an einer letzten erfolgreichen Eintragung, die durch das Anwendergerät ausgeführt wurde, beteiligt war;
Senden (102) durch die Funknetzsteuereinheit einer Umleitungsanforderung zu einem Kernnetz eines der Betreiber, die das MOCN bilden, und Empfangen einer PLMN-ID, die zu dem Anwendergerät durch das Kernnetz, das zu dem Betreiber gehört und die Umleitungsanforderung annimmt, zugestellt wird, wobei die Umleitungsanforderung die PLMN-ID führt, die durch das Anwendergerät ausgewählt ist, und die PLMN-ID, die zu dem Anwendergerät durch das Kernnetz, das zu dem Betreiber gehört und die Umleitungsanforderung annimmt, zugestellt wird, die PLMN-ID ist, die durch das Anwendergerät ausgewählt ist; und
Senden (103) durch die Funknetzsteuereinheit einer Abwärtsstreckendirektübertragungsnachricht zu dem Anwendergerät, wobei die Abwärtsstreckendirektübertragungsnachricht die PLMN-ID führt, die zu dem Anwendergerät durch das Kernnetz, das zu dem Betreiber gehört und die Umleitungsanforderung annimmt, zugestellt wird; wobei das Senden (102) durch die Funknetzsteuereinheit einer Umleitungsanforderung zu einem Kernnetz, das zu einem der Betreiber gehört, die das MOCN bilden, und Empfangen einer PLMN-ID, die zu dem Anwendergerät durch das Kernnetz, das zu dem Betreiber gehört und die Umleitungsanforderung annimmt, zugestellt wird, Folgendes umfasst:
Senden durch die Funknetzsteuereinheit der Umleitungsanforderung zu einem Kernnetz eines ersten Betreibers, das der PLMN-ID entspricht, die durch das Anwendergerät ausgewählt ist, wobei die Umleitungsanforderung die PLMN-ID führt, die durch das Anwendergerät ausgewählt ist;
Empfangen durch die Funknetzsteuereinheit einer Umleitungszurückweisungsnachricht, die durch das Kernnetz des ersten Betreibers gesendet wird, wobei ein Ursachenwert, der in der Umleitungszurückweisungsnachricht geführt ist, Aufenthaltsbereich nicht erlaubt ist, und die Umleitungszurückweisungsnachricht zu der Funknetzsteuereinheit gesendet wird, nachdem das Kernnetz des ersten Betreibers die Umleitungsanforderung empfangen hat und bestimmt hat, dass sich das Anwendergerät nicht in dem Kernnetz des ersten Betreibers aufhalten darf;
Senden durch die Funknetzsteuereinheit einer Umleitungsanforderung zu einem Kernnetz eines zweiten Betreibers, das nicht das Kernnetz des ersten Betreibers ist, unter den Kernnetzen der Betreiber, die das MOCN bilden, wobei die Umleitungsanforderung die PLMN-ID führt, die durch das Anwendergerät ausgewählt ist; und
Empfangen durch die Funknetzsteuereinheit einer Nichtzugangsschicht-Annahmenachricht, die durch das Kernnetz des zweiten Betreibers gesendet wird, wobei die Nichtzugangsschicht-Annahmenachricht eine PLMN-ID führt, die zu dem Anwendergerät durch das Kernnetz des zweiten Betreibers zugestellt wird, und die Nichtzugangsschicht-Annahmenachricht zu dem Anwendergerät gesendet wird, nachdem das Kernnetz des zweiten Betreibers die Umleitungsanforderung empfangen hat und bestimmt hat, dass das Kernnetz des zweiten Betreibers ein Kernnetz eines Betreibers ist, das einem Heimat-PLMN des Anwendergeräts entspricht, oder bestimmt hat, dass das sich Anwendergerät in dem Kernnetz des zweiten Betreibers aufhalten darf.

2. Verfahren nach Anspruch 1, wobei dass die Abwärtsstreckendirektübertragungsnachricht die PLMN-ID führt, die zu dem Anwendergerät durch das Kernnetz, das zu dem Betreiber gehört und das die Umleitungsanforderung annimmt, zugestellt wird, Folgendes umfasst:
die Abwärtsstreckendirektübertragungsnachricht führt eine Nichtzugangsschicht-Annahmenachricht, wobei eine PLMN-ID, die in einem Aufenthaltsbereichsidentitätsfeld der Nichtzugangsschicht-Annahmenachricht geführt ist, die PLMN-ID ist, die zu dem Anwendergerät durch das Kernnetz, das zu dem Betreiber gehört und die Umleitungsanforderung annimmt, zugestellt wird.

3. Funknetzsteuereinheit, die Folgendes umfasst:
ein Empfangsmodul (41), das konfiguriert ist: eine initiale Direktübertragungsnachricht zu empfangen, die durch ein Anwendergerät gesendet wird, das ein Mehrbetreiberkernnetz, MOCN, unterstützt, wobei die initiale Direktübertragungsnachricht eine Kennung eines öffentlichen Mobilfunknetzes, PLMN-ID, führt, die durch das Anwendergerät ausgewählt ist, und die PLMN-ID, die durch das Anwendergerät ausgewählt ist, eine ID eines PLMN ist, das an einer letzten erfolgreichen Eintragung, die durch das Anwendergerät ausgeführt wurde, beteiligt war; und nachdem ein Sendemodul (42) eine Umleitungsanforderung gesendet hat, eine PLMN-ID zu empfangen, die zu dem Anwendergerät durch ein Kernnetz, das zu einem Betreiber gehört und die Umleitungsanforderung annimmt, zugestellt wird, wobei die PLMN-ID, die zu dem Anwendergerät durch das Kernnetz, das zu dem Betreiber gehört und die Umleitungsanforderung annimmt, zugestellt wird, die PLMN-ID ist, die durch das Anwendergerät ausgewählt ist; und
das Sendemodul (42), das konfiguriert ist: die Umleitungsanforderung zu einem Kernnetz eines der Betreiber zu senden, die das MOCN bilden, wobei die Umleitungsanforderung die PLMN-ID führt, die durch das Anwendergerät ausgewählt ist; und eine Abwärtsstreckendirektübertragungsnachricht zu dem Anwendergerät zu senden, wobei die Abwärtsstreckendirektübertragungsnachricht die PLMN-ID führt, die zu dem Anwendergerät durch das Kernnetz, das zu dem Betreiber gehört und die Umleitungsanforderung annimmt, zugestellt wird; wobei dass das Sendemodul (42) konfiguriert ist, die Umleitungsanforderung zu einem Kernnetz eines der Betreiber zu senden, die das MOCN bilden, Folgendes umfasst:
das Sendemodul (42) ist insbesondere konfiguriert: eine Umleitungsanforderung zu einem Kernnetz eines ersten Betreibers, das der PLMN-ID entspricht, die durch das Anwendergerät ausgewählt ist, zu senden, wobei die Umleitungsanforderung die PLMN-ID führt, die durch das Anwendergerät ausgewählt ist; und nachdem das Empfangsmodul eine Umleitungszurückweisungsnachricht empfangen hat, die durch das Kernnetz des ersten Betreibers gesendet wird, eine Umleitungsanforderung zu einem Kernnetz eines zweiten Betreibers, das nicht das Kernnetz des ersten Betreibers ist, unter den Kernnetzen der Betreiber, die das MOCN bilden, zu senden, wobei die Umleitungsanforderung die PLMN-ID führt, die durch das Anwendergerät ausgewählt ist; und
dass ein Empfangsmodul (41) konfiguriert ist, eine PLMN-ID zu empfangen, die zu dem Anwendergerät durch ein Kernnetz, das zu einem Betreiber gehört und die Umleitungsanforderung annimmt, zugestellt wird, Folgendes umfasst:
das Empfangsmodul (41) ist insbesondere konfiguriert: nachdem das Sendemodul (42) die Umleitungsanforderung zu dem Kernnetz des ersten Betreibers gesendet hat, die Umleitungszurückweisungsnachricht, die durch das Kernnetz des ersten Betreibers gesendet wird, zu empfangen, wobei ein Ursachenwert, der in der Umleitungszurückweisungsnachricht geführt ist, Aufenthaltsbereich nicht erlaubt ist, und die Umleitungszurückweisungsnachricht zu der Funknetzsteuereinheit gesendet wird, nachdem das Kernnetz des ersten Betreibers die Umleitungsanforderung empfangen hat und bestimmt hat, dass sich das Anwendergerät nicht in dem Kernnetz des ersten Betreibers aufhalten darf; und nachdem das Sendemodul (42) die Umleitungsanforderung zu dem Kernnetz des zweiten Betreibers gesendet hat, eine Nichtzugangsschicht-Annahmenachricht zu empfangen, die durch das Kernnetz des zweiten Betreibers gesendet wird, wobei die Nichtzugangsschicht-Annahmenachricht eine PLMN-ID führt, die zu dem Anwendergerät durch das Kernnetz des zweiten Betreibers zugestellt wird, und die Nichtzugangsschicht-Annahmenachricht zu dem Anwendergerät gesendet wird, nachdem das Kernnetz des zweiten Betreibers die Umleitungsanforderung empfangen hat und bestimmt hat, dass das Kernnetz des zweiten Betreibers ein Kernnetz ist, das zu einem Betreiber gehört, der einem Heimat-PLMN des Anwendergeräts entspricht, oder bestimmt hat, dass sich das Anwendergerät in dem Kernnetz des zweiten Betreibers aufhalten darf.

## Revendications

1. Procédé d'enregistrement d'équipement d'utilisateur, comportant les étapes consistant à :
faire recevoir (101), par un contrôleur de réseau radio, un message de transfert direct initial émis par un équipement d'utilisateur qui prend en charge un réseau central multi-opérateurs, MOCN, le message de transfert direct initial transportant un identifiant de réseau mobile terrestre public, ID de RMTP, sélectionné par l'équipement d'utilisateur, et l'ID de RMTP sélectionné par l'équipement d'utilisateur étant un ID d'un RMTP intervenant dans un enregistrement réussi le plus récent effectué par l'équipement d'utilisateur ;
faire envoyer (102), par le contrôleur de réseau radio, une demande de redirection à un réseau central d'un des opérateurs qui forment le MOCN, et recevoir un ID de RMTP remis à l'équipement d'utilisateur par le réseau central qui appartient à l'opérateur et accepte la demande de redirection, la demande de redirection transportant l'ID de RMTP sélectionné par l'équipement d'utilisateur, et l'ID de RMTP remis à l'équipement d'utilisateur par le réseau central qui appartient à l'opérateur et accepte la demande de redirection est l'ID de RMTP sélectionné par l'équipement d'utilisateur ; et
faire envoyer (103), par le contrôleur de réseau radio, un message de transfert direct en liaison descendante à l'équipement d'utilisateur, le message de transfert direct en liaison descendante transportant l'ID de RMTP remis à l'équipement d'utilisateur par le réseau central qui appartient à l'opérateur et accepte la demande de redirection ; l'envoi (102), par le contrôleur de réseau radio, d'une demande de redirection à un réseau central d'un des opérateurs qui forment le MOCN, et la réception d'un ID de RMTP remis à l'équipement d'utilisateur par le réseau central qui appartient à l'opérateur et accepte la demande de redirection comportant les étapes consistant à :
faire envoyer, par le contrôleur de réseau radio, la demande de redirection à un réseau central d'un premier opérateur qui correspond à l'ID de RMTP sélectionné par l'équipement d'utilisateur, la demande de redirection transportant l'ID de RMTP sélectionné par l'équipement d'utilisateur ;
faire recevoir, par le contrôleur de réseau radio, un message de rejet de redirection émis par le réseau central du premier opérateur, une valeur de cause transportée dans le message de rejet de redirection étant le caractère non autorisé d'une zone de localisation, et le message de rejet de redirection étant envoyé au contrôleur de réseau radio après que le réseau central du premier opérateur a reçu la demande de redirection et a déterminé que l'équipement d'utilisateur n'est pas autorisé à être itinérant dans le réseau central du premier opérateur ;
faire envoyer, par le contrôleur de réseau radio, une demande de redirection à un réseau central d'un deuxième opérateur à l'exception du réseau central du premier opérateur parmi les réseaux centraux des opérateurs qui forment le MOCN, la demande de redirection transportant l'ID de RMTP sélectionné par l'équipement d'utilisateur ; et
faire recevoir, par le contrôleur de réseau radio, un message d'acceptation de strate hors accès émis par le réseau central du deuxième opérateur, le message d'acceptation de strate hors accès transportant un ID de RMTP remis à l'équipement d'utilisateur par le réseau central du deuxième opérateur, et le message d'acceptation de strate hors accès étant envoyé à l'équipement d'utilisateur après que le réseau central du deuxième opérateur a reçu la demande de redirection et a déterminé que le réseau central du deuxième opérateur est un réseau central d'un opérateur qui correspond à un RMTP de rattachement de l'équipement d'utilisateur ou a déterminé que l'équipement d'utilisateur est autorisé à être itinérant dans le réseau central du deuxième opérateur.

2. Procédé selon la revendication 1, le transport, par le message de transfert direct en liaison descendante, de l'ID de RMTP remis à l'équipement d'utilisateur par le réseau central qui appartient à l'opérateur et qui accepte la demande de redirection, comportant :
le transport, par le message de transfert direct en liaison descendante, d'un message d'acceptation de strate hors accès, un ID de RMTP transporté dans un champ d'identité de zone de localisation du message d'acceptation de strate hors accès étant l'ID de RMTP remis à l'équipement d'utilisateur par le réseau central qui appartient à l'opérateur et accepte la demande de redirection.

3. Contrôleur de réseau radio, comportant :
un module (41) de réception, configuré pour : recevoir un message de transfert direct initial émis par un équipement d'utilisateur qui prend en charge un réseau central multi-opérateurs, MOCN, le message de transfert direct initial transportant un identifiant de réseau mobile terrestre public, ID de RMTP, sélectionné par l'équipement d'utilisateur, et l'ID de RMTP sélectionné par l'équipement d'utilisateur étant un ID d'un RMTP intervenant dans un enregistrement réussi le plus récent effectué par l'équipement d'utilisateur ; et après qu'un module (42) d'émission a envoyé une demande de redirection, recevoir un ID de RMTP remis à l'équipement d'utilisateur par un réseau central qui appartient à un opérateur et accepte la demande de redirection, l'ID de RMTP remis à l'équipement d'utilisateur par le réseau central qui appartient à l'opérateur et accepte la demande de redirection étant l'ID de RMTP sélectionné par l'équipement d'utilisateur ; et
le module (42) d'émission, configuré pour : envoyer la demande de redirection à un réseau central d'un des opérateurs qui forment le MOCN, la demande de redirection transportant l'ID de RMTP sélectionné par l'équipement d'utilisateur ; et envoyer un message de transfert direct en liaison descendante à l'équipement d'utilisateur, le message de transfert direct en liaison descendante transportant l'ID de RMTP remis à l'équipement d'utilisateur par le réseau central qui appartient à l'opérateur et accepte la demande de redirection ; le fait que le module (42) d'émission soit configuré pour envoyer la demande de redirection à un réseau central d'un des opérateurs qui forment le MOCN comportant :
le fait que le module (42) d'émission soit spécifiquement configuré pour : envoyer une demande de redirection à un réseau central d'un premier opérateur qui correspond à l'ID de RMTP sélectionné par l'équipement d'utilisateur, la demande de redirection transportant l'ID de RMTP sélectionné par l'équipement d'utilisateur ; et après que le module de réception a reçu un message de rejet de redirection émis par le réseau central du premier opérateur, envoyer une demande de redirection à un réseau central d'un deuxième opérateur à l'exception du réseau central du premier opérateur parmi les réseaux centraux des opérateurs qui forment le MOCN, la demande de redirection transportant l'ID de RMTP sélectionné par l'équipement d'utilisateur ; et
le fait qu'un module (41) de réception soit configuré pour recevoir un ID de RMTP remis à l'équipement d'utilisateur par un réseau central qui appartient à un opérateur et accepte la demande de redirection comportant :
le fait que le module (41) de réception soit spécifiquement configuré pour : après que le module (42) d'émission a envoyé la demande de redirection au réseau central du premier opérateur, recevoir le message de rejet de redirection émis par le réseau central du premier opérateur, une valeur de cause transportée dans le message de rejet de redirection étant le caractère non autorisé d'une zone de localisation, et le message de rejet de redirection étant envoyé au contrôleur de réseau radio après que le réseau central du premier opérateur a reçu la demande de redirection et a déterminé que l'équipement d'utilisateur n'est pas autorisé à être itinérant dans le réseau central du premier opérateur ; et après que le module (42) d'émission a envoyé la demande de redirection au réseau central du deuxième opérateur, recevoir un message d'acceptation de strate hors accès émis par le réseau central du deuxième opérateur, le message d'acceptation de strate hors accès transportant un ID de RMTP remis à l'équipement d'utilisateur par le réseau central du deuxième opérateur, et le message d'acceptation de strate hors accès étant envoyé à l'équipement d'utilisateur après que le réseau central du deuxième opérateur a reçu la demande de redirection et a déterminé que le réseau central du deuxième opérateur est un réseau central qui appartient à un opérateur qui correspond à un RMTP de rattachement de l'équipement d'utilisateur ou a déterminé que l'équipement d'utilisateur est autorisé à être itinérant dans le réseau central du deuxième opérateur.
